# EUROPEAN PATENT APPLICATION

(11) **EP 1 314 597 A2**
(43) Date of publication of application: **28.05.2003**
(21) Application number: 02026019.6
(22) Date of filing: 21.11.2002
(51) Int. Cl.: B60J 5/04, E05D 11/06, E05D 3/06

(54) **Hinge structure of a vehicle door**

(30) Priority: 21.11.2001 JP 2001355519
(71) Applicant: FUJI JUKOGYO KABUSHIKI KAISHA, Tokyo 160-0023 (JP)
(72) Inventor: Hara, Yukio, c/o Fuji Jukogyo K. K., Tokyo (JP); Takayama, Keizo, c/o Fuji Jukogyo K. K., Tokyo (JP)
(74) Representative: Sajda, Wolf E., Dipl.-Phys.

(57) **Abstract**

A hinge structure of a jutting door (2) for a vehicle has a hinge member (3) pivotally attached to between the inside of a vehicle body (1) and a door (2) at the both ends, the hinge member (3) being adapted to be swung so that the door (2) opens with a forward movement. The door hinge structure comprises a rod member (4) having a length different from that of the hinge member (3). The rod member (4) is pivotally attached to between the inside of the vehicle body (1) and the door (2) at the both ends so as to restrain an outer end of the door (2) from excessively opening. The hinge member (3) has an avoiding part (10A, 10B) for avoiding a touch with the vehicle body (1) when the door (2) is fully or nearly fully open. The hinge part can be arranged on the passenger compartment side which is unaffected by mud, without the hinge part and the rod part protruding into the passenger compartment to obstruct the passenger when the door (2) is fully closed. When the door (2) is fully open, the door (2) juts out and moves forward so that a large door space (S) is secured near the hinge part for the sake of wheelchair access.

## Description

### BACKGROUND OF THE INVENTION

The present invention relates to a door hinge of a vehicle for opening a door without touching an edge thereof with an entrance frame structure when widely opening it.

In general, hinged doors of a vehicle such as an automobile adopt a pillar hinge in which a hinge part is attached to a pillar of a vehicle body. The hinge part is usually arranged on an external side of the pillar so that the door can be opened as widely as possible. The hinged door for an ordinary pillar hinge type, however, becomes an obstacle for a passenger to get on and out due to a presence of door members near the hinge part in the fully opened position. Not only ordinary passengers but also handicapped people have to lean forward. And further, a facility to allow a wheelchair to access to a seat has been expected.

Under these circumstances, the following door hinge structures have been proposed and put to use. That is, in the structures, the hinge part of the door itself moves when the door opens, so that the opening door makes a forward movement to provide a wide space near the hinge part. Showing a few examples, Japanese Utility Model Publication No. Sho. 59-249 discloses a first conventional example. In the example, a door support arm is pivotally supported on a pillar at an approximately central position of an inside of the door at the both ends. As the door opens, an interlock mechanism arranged across the ends of the door support arm rotates the door in a direction opposite to an opening direction so that a front part of the door juts out while the outer end of the door is restrained from excessively opening.

In addition, Japanese Utility Model Publications Nos. Sho. 61-9966 and Hei. 1-32579 disclose a second conventional example. In the example, the hinge part of the door is arranged with two arm members between a vehicle body such as the pillar and the hinge part, the arm members being pivotally supported at the both ends each. This arrangement controls the opening/closing track of the door. Moreover, Japanese Utility Model Publication No. Sho. 59-13146 discloses a third conventional example. In the example, the extremity of an arm which is connected to a parallelogramic link pivoted on the inside of the pillar is pivotally supported in the vicinity of the front part of the door, while the extremity of another arm pivotally supported in the vicinity of the rear part of the door is moved along a floor or an underfloor guide groove so as to control the jutting of the door.

The foregoing conventional examples, however, have the following drawbacks. In the first conventional example disclosed in Japanese Utility Model Publication No. Sho. 59-249, the front part of the door juts out and the outer end of the door is restrained from excessively opening, whereas the door support arm incorporating the interlock mechanism is complicated in structure, thus heavy in weight, and large in bulk, possibly being an obstacle to wheelchair access. In the second conventional example disclosed in Japanese Utility Model Publications Nos. Sho. 61-9966 and Hei. 1-32579, the opening/closing track of the door which realizes the jutting is under control, whereas the hinge part is arranged on the outside of the pillar and thus susceptible to mud. In addition, the relatively short configuration of the two arms for controlling the opening/closing track of the door results in smaller jutting of the door, with weaker power to restrain the outer end of the door from excessively opening. This may cause an excessive load on the hinge part. In the third embodiment disclosed in Japanese Utility Model Publication No. Sho. 59-13146, the hinge part is arranged on the passenger compartment side of the vehicle body and thus is unaffected by the mud. Nevertheless, the hinge part is complicated in the structure, thus requiring higher cost. Besides, the huge structure such that the extremity of the arm which restrains the outer end of the door from excessively opening is moved along the floor or underfloor guide groove causes a further increase in cost.

### SUMMARY OF THE INVENTION

In view of the foregoing, it is an object of the present invention to provide a hinge structure of a jutting door which solves the problems of the conventional jutting door structures described above, allows application to passenger vehicles through an adoption of simple configuration, makes smaller protrusion into a passenger compartment, allows the hinge part to be arranged on the passenger compartment side which is unaffected by mud, and secures high restraint for a door action control.

The present invention thus provides a door hinge structure of a vehicle having at least one hinge member pivotally attached to between an inside of a vehicle and a door at the both ends, the hinge member being swung so that the door opens with a forward movement. The door hinge structure includes a rod member having a length different from that of the hinge member. The rod member is pivotally attached to between the inside of the vehicle body and the door at the both ends so as to restrain an outer end of the door from excessively opening. The hinge member has an avoiding part for avoiding a touch with the vehicle body when the door is fully or near fully open. The present invention is also characterized in that the avoiding part of the hinge member is accommodated in an instrument panel when the door is fully or near fully closed. The present invention is also characterized in that the rod member is arranged between a pair of hinge members arranged at upper and lower portions of the door, at a height without interfering with the feet of a passenger on a wheelchair who gets in or out of a passenger seat. Further, the present invention is also characterized in that a pivotal support part of the rod member on the door is configured so as to make a forward and rearward movement. In addition, the present invention is also characterized in that the pivotal support part of the rod member on the door makes the forward and rearward movement through a door action control mechanism comprising a plurality of concavities.

By these solving means, the hinge parts can be arranged on the passenger compartment side which is unaffected by mud, without protruding of the hinge parts and the rod part into the passenger compartment to obstruct the passenger when the door is fully closed. When the door is fully open, the door juts out and moves forward so that a large door space can be secured near the hinge parts so as to allow the wheelchair to access. In addition, the rod member of the simple configuration can powerfully restrain the outer end of the door from excessively opening.

### BRIEF DESCRIPTION OF THE DRAWINGS

These and other objects and advantages of the present invention will become clearly understood from the following description with reference to the accompanying drawings, wherein:
Fig. 1 is a plan view of opening and closing states of a vehicle door, showing a door hinge structure according to the first embodiment of the present invention;
Fig. 2 is a perspective view of the opening and closing states of the door shown in Fig. 1 as seen from an inside of the passenger compartment;
Fig. 3 is the perspective view of the opening and closing states of the door shown in Fig. 1 as seen from an outside of the compartment;
Fig. 4 is an enlarged perspective view showing essential parts of the door hinge structure according to the second embodiment of the present invention; and
Fig. 5 is an end view of a rod door hinge part according to the third embodiment of the present invention, which is sectioned along a line X - X of Fig. 4,and seen downwardly therefrom.

### DETAILED DESCRIPTION OF THE PREFERRED EMBODIMENTS

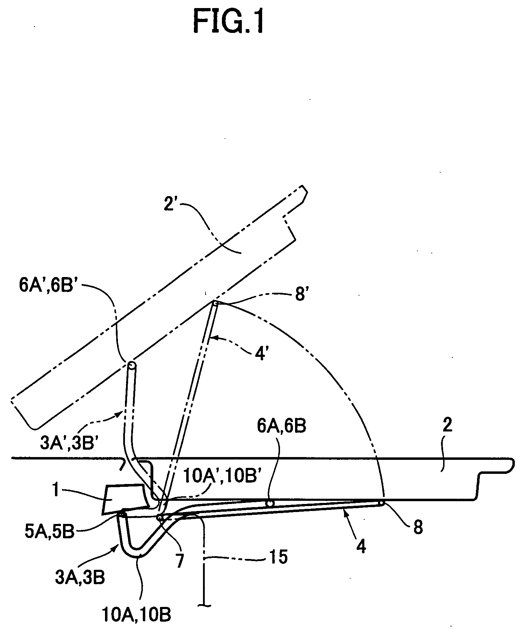

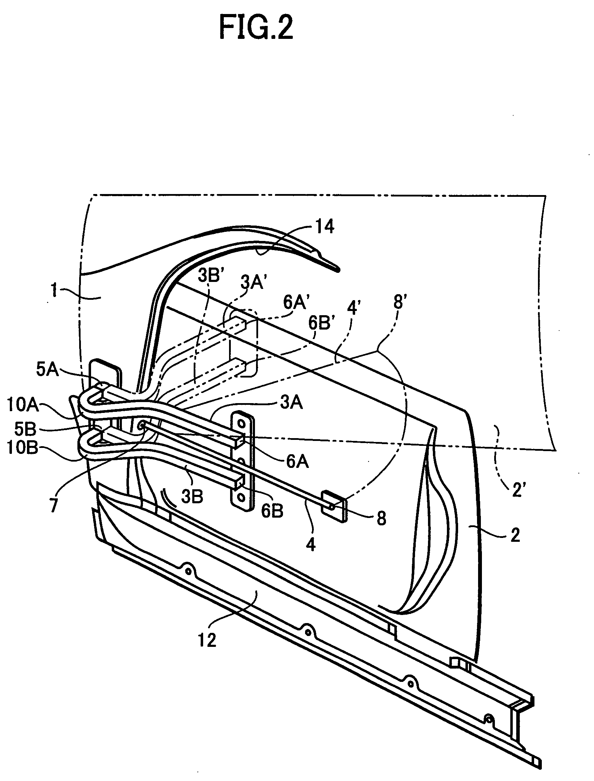

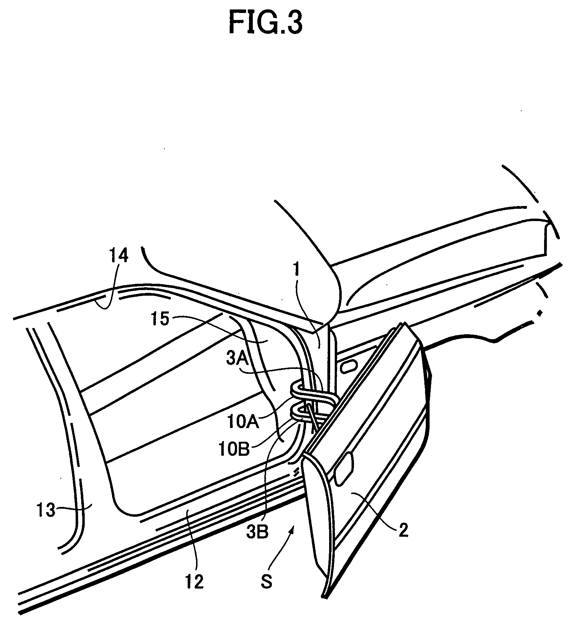

Hereinafter, embodiments of a door hinge structure for a vehicle according to the present invention will be described in detail with reference to the drawings. Figs. 1-3 show the first embodiment of the door hinge structure of the present invention. Fig. 1 is a plan view showing opening and closing states of a door. Fig. 2 is a perspective view of the opening and closing states of the door as seen from an inside of the passenger compartment. Fig. 3 is a perspective view showing the opening and closing states of the door as seen from an outside of the passenger compartment. As shown in Fig. 1, the door hinge structure of the present invention has hinge members 3A and 3B which are pivotally attached to between a front pillar 1 on the inside of a vehicle body and a door 2 at the both ends. The hinge members 3A and 3B swing so that door 2 opens with a forward movement. The door hinge structure is characterized in that a rod member 4 having a length different from those of the hinge members 3A and 3B is pivotally attached to between the front pillar 1 on the inside of the vehicle body and the door 2 at the both ends so as to restrain an outer end of the door 2 from excessively opening, and that the hinge members 3A and 3B have avoiding parts 10A and 10B for avoiding a touch with the front pillar 1 when the door 2 is fully or near fully open.

As shown in Fig. 3, the door 2 is arranged in a door opening 14, which is formed by a front pillar 1, a center pillar 13, and side sills 12 for making a part of the vehicle body. As is evident from the solid lines in Fig. 2, or a view from the inside of a compartment, the door 2 is openably and closably supported on the front pillar 1 by the pair of the upper and lower hinge members 3A, 3B and the rod member 4 arranged therebetween. The bottoms of the hinge members 3A and 3B are pivotally supported on the inside of the front pillar 1, or the vehicle body members, with body hinges 5A and 5B. The hinge members 3A and 3B are vertically spaced with a predetermined distance from each other across an approximately vertical center of the door body (at a height without interfering with the feet of a passenger on a wheelchair who gets in and out of the passenger seat) . The ends of the hinge member 3A and 3B are pivotally supported on the center of the inner side of the door 2, a little toward the front, with door hinges 6A and 6B. Since the hinge members 3A and 3B bear the almost load of the door 2, the structure is formed with relatively high rigidity.

Meanwhile, the rod member 4 arranged between the hinge members 3A and 3B is pivotally supported at a bottom of the inside of the front pillar 1 with a rod body hinge 7. The other end of the rod member 4 is pivotally supported on behind the door hinges 6A, 6B of the hinge members 3A, 3B with a rod door hinge 8. The hinge members 3 and the rod member 4 differ from each other in length and in a radius of a swing. The hinge members 3A and 3B have avoiding parts 10A and 10B, respectively, which are shaped to curve into the compartment. The avoiding parts 10A and 10B of the respective hinge members 3A and 3B are configured to avoid touching with the vehicle body, or the front pillar 1, when the door 2 is fully or near fully open as shown by a dashed line. The avoiding parts 10A and 10B are accommodated in an instrument panel 15 (see Figs. 1 and 3) when the door 2 is fully or near fully closed. As the door 2 is opened from a closed position 2 shown by a solid line to a full open position 2' shown by a dashed line, the door hinges 6A and 6B at the ends of the hinge members 3A and 3B reach 6A' and 6B', respectively. The rod member 4 also swings to a position 4', so that the rod door hinge 8 at the end reaches a position 8'.

Fig. 1 is a plan view showing the opening and closing of the door 2 from above. The jutting movement behavior of the door 2 is seen clearly. In the door 2, the relatively short hinge members 3A and 3B swing with their bottoms about the body hinges 5A and 5B. The door hinges 6A and 6B at the ends, which are pivotally supported on the center of the inner side of the door 2 a little toward the front, move ahead outward. The avoiding parts 10A and 10B formed as curved toward the hinge members 3A and 3B avoid a touch with the vehicle body, or the front pillar 1, so that the front edge of the door 2 can jut forward sufficiently. Since the hinge members 3A and 3B are short in length, the swing requires a small opening and a small relief alone.

Here, the long rod member 4 swings with the bottom about the rod body hinge 7, which lies a little behind the body hinges 5A and 5B of the hinge members 3A and 3B. Thus, the rod door hinge 8 at the end, pivotally supported at a position behind the door hinges 6A and 6B, functions to restrain the outer end of the door 2 from excessively opening without interfering with the front pillar 1 until the door 2 moves to the fully opened position. Since the rod member 4 links fixed points with a straight line, it may be a thin wire rod with a small protrusion into the passenger compartment. Consequently, the door 2 can be swung open in such behavior as involving not only a just swing-opening action but a parallel displacement as well. As shown in Fig. 3 viewed from the outside of the compartment, when the door 2 is fully open, this opening behavior creates a wide space S near the hinge parts without a large swing. Consequently, even for a passenger car with standard height having no large door opening, it is possible to drag in and accommodate a wheelchair easily without the pedals or the like interfering with the vehicle body.

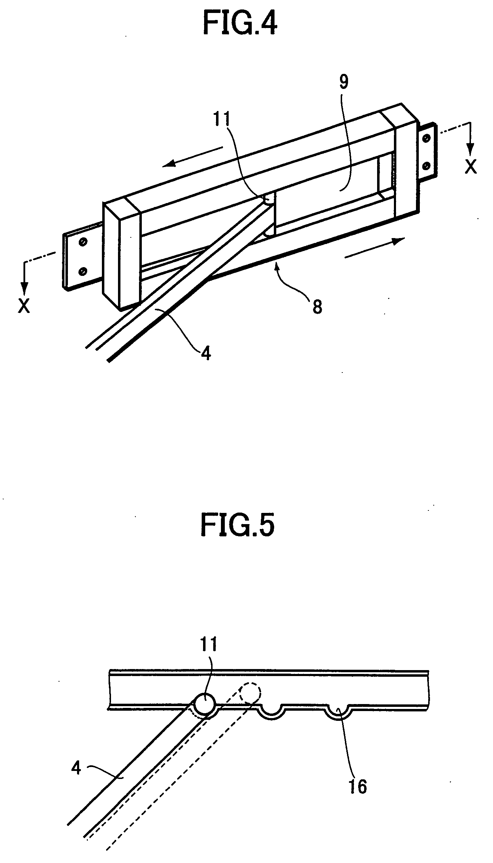

Fig. 4 is a perspective view of a rod door hinge part at the end of the rod member 4, showing a second embodiment of the door hinge structure of the present invention. The present embodiment gives a modified example of the rod door hinge 8 which is the pivotal support part of the rod member 4 on the door 2. In the rod door hinge 8, a hinge shaft 11 at the end of the rod member 4 is engaged in a long hole 9 formed in the inner side of the door 2, so as to enable the forward and rearward movement. Further, as shown in Fig. 5, the pivotal support part of the rod member 4 on the door 2, i.e., the hinge shaft 11 is configured to make the forward and rearward movement, preferably through a door action control mechanism comprising a plurality of concavities 16. Such configuration allows the door to be further widely opened beyond the full open position shown by the double dashed lines shown in Fig. 1, as much as the hinge shaft 11 of the rod member 4 moves from the rear end to the front end of the long hole 9. Here, the door action control mechanism comprising the plurality of concavities 16 provided in the long hole 9, if arranged, reduce the possibility of a collision with obstacles in the sideward direction of the vehicle when the door 2 is further opened. As the door 2 is closed, the hinge shaft 11 of the rod member 4 moves through the long hole 9 to the rear end before the rod member 4 swings until the door 2 moves to the closed position.

While the embodiments of each present invention have been described as above, selections regarding each shape or arrangement of the parts may be made as appropriate within the intended scope of the present invention. The possible selections include: portions to which the door hinge structure is applied (doors other than that of the driver seat are also applicable); the shapes of the body constituting front pillar, the door, the hinge members including the avoiding parts, and the rod member; the mode of accommodation of the avoiding parts in the instrument panel; the mode of arrangement of the hinge members and the rod member (such configuration as arranges the pair of hinge members at the upper and lower portions of the door may be adopted unless the interference occurs with wheelchair pedals, passenger's feet, etc. The rod member may also be positioned as appropriate) ; the modes of a pivotal support of the hinge members and the rod member on the vehicle body and the door; and the shape and type of the door action control mechanism in the long hole against the hinge shaft of the rod member (such as a combination of a corrugated plate and a hinge shaft).

As have been explained in details above, the present invention provides the door hinge structure of the vehicle having hinge members pivotally attached to between the inside of the vehicle body and the door at the both ends, wherein the hinge members swing so that the door opens with the forward movement. The door hinge structure includes the rod member having the length different from those of the hinge members, wherein the rod member is pivotally attached to between the inside of the vehicle body and the door at the both ends so as to restrain an outermost end of the door from excessively opening. Further, the hinge members have the avoiding parts for avoiding a touch with the vehicle body when the door is fully or near fully open. Consequently, the individual hinge parts and the rod part are arranged on the compartment side of the vehicle body, and thus are unaffected by the mud. Besides, the rod member for restraining the outer end of the door from excessively opening can be arranged in straight. This reduces the protrusion into the compartment and requires not much strength, thus resulting in a low cost. Moreover, the provision of the avoiding parts allows the hinge members to swing to the open position widely, securing a large space near the hinge parts so that a wheelchair can be easily accommodated into the passenger compartment.

The avoiding parts of the hinge members are configured to be accommodated in the instrument panel when the door is fully or near fully closed. Thus, the avoiding parts which protrude somewhat into the compartment when the door is fully or near fully closed cause neither the obstacle to the passenger nor to an appearance.

The rod member is arranged between the pair of the hinge members arranged at the upper and lower portions of the door at a height without interfering with the feet of the passenger on a wheelchair who gets in or out of the passenger seat. Therefore, the door support part of the rod member is arranged near between the door support parts of the hinge members. This arrangement results in relatively uniform load distribution, and makes wheelchair accommodation easy and smooth.

The pivotal support part of the rod member on the door is configured so as to easily make the forward and rearward movement. Consequently, the door can be opened beyond the full open position of the door as far as the pivotal support part of the rod member can move. This further facilitates a passenger access, the wheelchair accommodation, and a wheelchair removal.

The pivotal support part of the rod member on the door makes the forward and rearward movement through the door action control mechanism comprising the plurality of the concavities. Thus, the stepwise door action control can reduce the possibility of collisions with any obstacles beside the vehicle when the door is further opened as far as the pivotal support part of the rod member can move.

As above, according to the present invention, there is provided the door structure which allows applications to passenger vehicles through the adoption of simple configurations, makes a smaller protrusion into the compartment, allows the hinge parts to be arranged on the passenger compartment side which is unaffected by the mud, and secures high restraint for the door action control.

## Claims

1. A hinge structure of a vehicle door (2) having at least one hinge member (3) pivotally attached to between an inside of a vehicle body (1) and a door (2) at both ends, the hinge member (3) being adapted to be swung so that the door (2) opens with a forward movement, comprising:
- a rod member (4) with a length different from that of the hinge member (3), the rod member (4) being pivotally attached to between the inside of the vehicle body (1) and the door (2) at the both ends so as to restrain an outer end of the door (2) from excessively opening; and
- an avoiding part (10A, 10B) formed on the hinge member (3) for avoiding a touch with the vehicle body (1) when the door (2) is fully or nearly fully open.

2. The hinge structure according to claim 1,
wherein the avoiding part (10A, 10B) is accommodated in an instrument panel when the door (2) is fully or nearly fully closed.

3. The hinge structure according to claim 1 or 2,
wherein the rod member (4) is arranged between a pair of hinge members (3A, 3B) arranged at upper and lower portions of the door (2), at a height without interfering with a foot of a passenger on a wheelchair.

4. The hinge structure
according to any of claims 1 to 3,
wherein a pivotal support part (8) of the rod member (4) on the door (2) is configured so as to make a forward and rearward movement.

5. The hinge structure according to claim 4,
wherein the pivotal support part (8) of the rod member (4) on the door (2) is adapted to make the forward and rearward movement through a door action control mechanism comprising a plurality of concavities (16).
